# EUROPÄISCHE PATENTANMELDUNG

(11) **EP 1 591 692 A2**
(43) Veröffentlichungstag der Anmeldung: **02.11.2005**
(21) Anmeldenummer: 05007918.5
(22) Anmeldetag: 12.04.2005
(51) Int. Cl.: F16G 13/16

(54) **Energieführungskette**

(30) Priorität: 29.04.2004 DE 202004006898 U
(71) Anmelder: Murrplastik Systemtechnik GmbH, 71570 Oppenweiler (DE)
(72) Erfinder: Scharf-Martini, Lutz, 73614 Schorndorf (DE); Funk, Rainer, 71543 Wüstenrot (DE)
(74) Vertreter: Jeck, Anton

(57) **Zusammenfassung**

Die Erfindung betrifft eine Energieführungskette zur Aufnahme von Energieführungskabeln oder -schläuchen mit drehbar miteinander verbundenen Kettengliedern, die jeweils aus zwei parallelen und im Abstand zueinander angeordneten Seitenlaschen sowie zwei diese miteinander verbindenden Querstegen bestehen. Es ist mindestens ein durch Einrasten mit der Kette verbindbarer Zugentlastungskamm mit Profil für die Kabel oder Schläuche vorgesehen, der in Kettenlängsrichtung verlaufende und im Abstand zueinander angeordnete Zinken aufweist. Das Profil ist mit Klemmelementen (8) versehen und auf einen Quersteg (15) aufrastbar.

## Beschreibung

Die Erfindung betrifft eine Energieführungskette gemäß dem Oberbegriff des Anspruchs 1.

Eine derartige Energieführungskette ist z. B. in der DE-U1-94 17 379 offenbart. Dort wird ein mit dem einen oder dem anderen Ende der Energieführungskette verbindbares Endbefestigungsteil vorgeschlagen, das mit Öffnungen aufweisenden Laschen versehen ist, die mit diesen Öffnungen auf Drehzapfen des Endkettenglieds aufrastbar sind. Zwischen diesen Laschen des Endbefestigungsteils kann der Zugentlastungskamm mittels einer Rastverbindung angeordnet werden. Die Nachteile einer derartigen Zugentlastungsvorrichtung bestehen insbesondere darin, dass der Aufwand eines besonderen Endbefestigungsteils nötig ist, dass der Zugentlastungskamm nur an den Enden der Energieführungskette einsetzbar ist und dass die Anzahl der an den Zinken befestigbaren Leitungen oder Schläuche beschränkt ist.

Durch die EP-A1-0 890 759 ist eine Klemmvorrichtung für eine Zugentlastung von Leitungen in einer Energieführungskette bekannt, bei der mindestens ein in einen Quersteg einsetzbarer Flachstab mit in Längsrichtung gereihten Rastausnehmungen und stabförmige, mit einem ringförmigen Anschlussende versehene Klemmelemente vorgesehen sind, die mit diesen Anschlussenden auf den Flachstab aufrastbar sind. Von Nachteil ist, dass die gleichzeitige Klemmbefestigung von Energieführungsleitungen verschiedenen Durchmessers jedoch schwierig ist, dass die Montage der Flachstäbe und der Klemmelemente umständlich ist und dass die Querstege mit die Stabilität der Querstege schwächenden Bohrungen zur Aufnahme der Flachstäbe versehen sein müssen.

Schließlich ist durch die WO 95/28582 ein Quersteg zur stirnseitigen Verbindung mit den Seitenlaschen eines Kettenglieds einer Energieführungskette bekannt, bei der der Quersteg mit einer zum Ketteninneren offenen, eine Hinterschneidung aufweisenden Befestigungsnut versehen ist. In diese Befestigungsnut sind die Enden von Zugentlastungsbügel einsetzbar. In diesen Bügeln sind Zugentlastungsglieder angeordnet, die mittels in die Bügel einschraubbarer Schrauben auf die zu arretierenden Kabel gedrückt werden, die somit zwischen diesen Zugentlastungsgliedern und dem Quersteg eingeklemmt werden. Von Nachteil ist, dass somit eine aus vielen Teilen bestehende Zugentlastungsvorrichtung verwendet wird, deren Montage überdies umständlich ist.

Die Aufgabe der Erfindung besteht daher darin, eine Energieführungskette der im Oberbegriff des Anspruchs 1 genannten Art zu schaffen, bei der die Zugentlastung der Kabel oder Schläuche in Bezug auf die Kettenlänge an beliebiger Stelle auf einfache Weise vorgenommen werden kann.

Diese Aufgabe wird mit den Merkmalen des Anspruchs 1 gelöst.

Die Erfindung hat die Vorteile, dass der Zugentlastungskamm einfach auf den Quersteg aufgesteckt werden kann, und zwar entweder von oben oder von unten, dass eine Anordnung von Zugentlastungskämmen auf dem Quersteg nebeneinander möglich ist, so dass eine Anpassung an verschiedene Kettenbreiten durch normierte Zugentlastungskämme möglich ist und dass übliche Kabelbinder zur Festlegung der Kabel und Schläuche verwendet werden können.

Gemäß einer weiteren Ausbildung der Erfindung ist gegenüber den Zinken am Profil eine weitere Zinkenreihe angeordnet. Dadurch kann die Sicherheit der Kabelbefestigung und/oder die Anzahl der festzulegenden Kabel oder Schläuche erhöht werden.

Gemäß einer weiteren Ausbildung der Erfindung weisen die Enden der Zinken jeweils eine Abkröpfung auf, durch die der Kabelbinder gegen Abrutschen vom Zinken gesichert wird.

Gemäß einer weiteren, einfachen Ausbildung der Erfindung sind die Klemmelemente durch eine Anzahl von Rastnasen tragende Rastfedern gebildet.

Eine weitere Ausbildung der Erfindung bezieht sich auf eine Energieführungskette, bei der die Schmallängsseiten der Querstege mit Seitennuten zur Befestigung von Trennstegen versehen sind. Diese Ausbildung sieht vor, dass die Rastnasen in die Nuten eingreifen. Der Halt des Zugentlastungskamms auf dem Quersteg wird hierdurch verbessert.

Eine weitere Ausbildung der Erfindung bezieht sich auf eine Energieführungskette, bei der die ins Ketteninnere weisenden Seiten der Querstege mit jeweils einer Bodennut zur Befestigung von Trennstegen versehen sind. Diese Ausbildung sieht vor, dass das Profil mit mindestens einem in die Bodennut passenden Nocken versehen ist. Dadurch wird der Halt des Zugentlastungskamms auf dem Quersteg weiter verbessert.

Die Erfindung wird nun an Hand eines Ausführungsbeispiels näher erläutert. Es zeigen:
- Fig. 1: eine Draufsicht auf einen Zugentlastungskamm gemäß der Erfindung,
- Fig. 2: einen Schnitt längs der Linie II-II in Fig. 1,
- Fig. 3: einen Schnitt längs der Linie III-III in Fig. 1,
- Fig. 4: einen Schnitt längs der Linie IV-IV in Fig. 1 und
- Fig. 5: eine Seitenansicht des Zugentlastungskamms der Fig. 1 und eine Seitenansicht eines bekannten Querstegs.

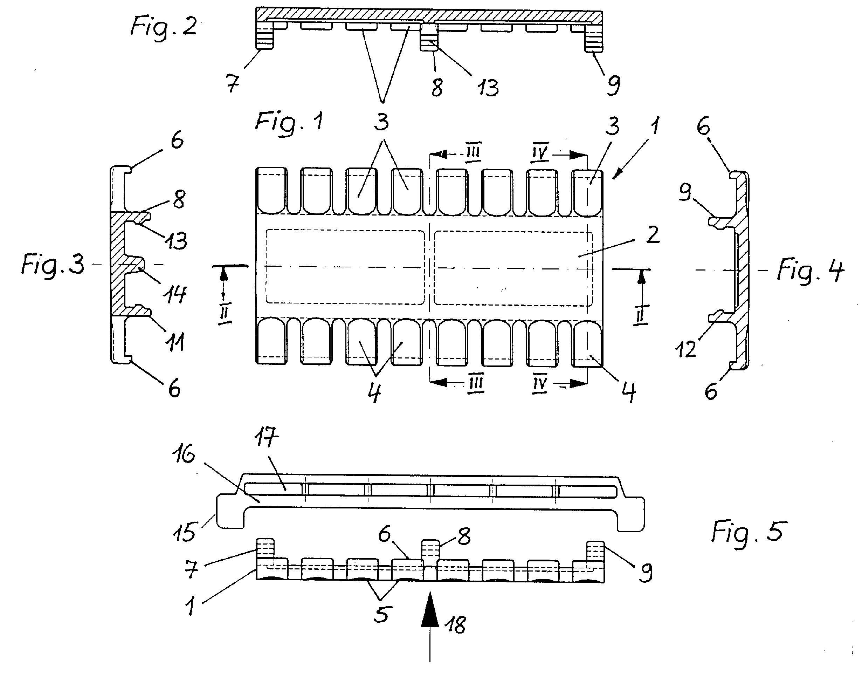

Der in den Figuren dargestellte Zugentlastungskamm 1 besteht aus einem plattenförmigen Profil 2 und zwei gegenüber liegenden Reihen aus daran angeordneten Zinken, wie den Zinken 3 bzw. 4. Jede Reihe hat acht Zinken, die parallel zur Längsrichtung des nicht dargestellten Kettenglieds und im Abstand zueinander angeordnet sind. Wie aus den Figuren 2-5 zu erkennen ist, weist jeder Zinken 3, 4 auf seiner Oberseite eine etwa an die Kabelrundung angepass te Vertiefung, wie die Vertiefung 5, und am freien Ende auf seiner Unterseite eine Abkröpfung, wie die Abkröpfung 6, auf.

Auf der Seite der Akbröpfungen 6 ist das Profil 2 in der Nähe der Fußenden der Zinken 3, 4 mit jeweils drei Klemmelementen in Form von Rastfedern, wie den Rastfedern 7, 8, 9 bzw. 11, 12, einstückig versehen. Diese Rastfedern sind an den Längsenden und in der Längsmitte des Profils 2 in zwei geraden Reihen angeordnet. Jede dieser Rastfedern trägt eine nach innen weisende Rastnase, wie die Rastnase 13 (Figuren 2, 3). Die Abstände der zwei Reihen aus Rastfedern sind an die Breite des in Fig. 5 dargestellten Querstegs 15 angepasst. Ferner weist das Profil 2 in der Mitte einen Nocken 14 auf, der an die Form einer nicht dargestellten, in Längsrichtung des Querstegs 15 verlaufenden Bodennut auf der Unterseite des Querstegs 15 angepasst ist.

Der Quersteg 15 weist ferner an den Schmallängseiten, wie der Schmallängsseite 16, in Längsrichtung des Querstegs 15 verlaufende Seitennuten, wie der Seitennut 17, auf. Diese Seitennuten und die Bodennut dienen in bekannter Weise zur Befestigung von Trennstegen. Die Querstege selbst sind bekanntermaßen in der Nähe der oberen Längsseitenkanten und unteren Längsseitenkante der beiden nicht dargestellten Seitenlaschen eines Kettenglieds angeordnet.

Beim Einsetzen des Zugentlastungskamms 1 in Pfeilrichtung des Pfeils 18 auf den Quersteg 15 von unten rasten die Rastfedern 7-12 mit ihren Rastnasen 13 in die Seitennuten 17 des Querstegs 15 ein. Dabei wird der Nocken 14 formschlüssig in der Bodennut des Querstegs 15 gehalten. Der Zugentlastungskamm 1 ist damit sicher am Quersteg 15 befestigt, und die nicht dargestellten Kabel und/oder Schläuche können mittels üblichen Kabelbindern an den Zinken 3, 4 befestigt werden, wobei die Abkröpfungen 6 ein Abrutschen der Kabelbinder verhindern.

## Patentansprüche

1. Energieführungskette zur Aufnahme von Energieführungskabeln oder - schläuchen mit drehbar miteinander verbundenen Kettengliedern, die jeweils aus zwei parallelen und im Abstand zueinander angeordneten Seitenlaschen sowie zwei diese miteinander verbindenden Querstegen bestehen, und mit mindestens einem durch Einrasten mit der Kette verbindbaren Zugentlastungskamm mit Profil für die Kabel oder Schläuche, der in Kettenlängsrichtung verlaufende und im Abstand zueinander angeordnete Zinken aufweist,
**dadurch gekennzeichnet,**
**dass** das Profil (2) mit Klemmelementen (8-12) versehen und auf einen Quersteg (15) aufrastbar ist.

2. Energieführungskette nach Anspruch 1,
**dadurch gekennzeichnet,**
**dass** gegenüber den Zinken (3) am Profil (2) eine weitere Zinkenreihe (4) angeordnet ist.

3. Energieführungskette nach Anspruch 1 oder 2,
**dadurch gekennzeichnet,**
**dass** die Enden der Zinken (3, 4) jeweils eine Abkröpfung (6) aufweisen.

4. Energieführungskette nach einem der Ansprüche 1 bis 3, **dadurch gekennzeichnet,**
**dass** die Klemmelemente durch eine Anzahl von Rastnasen (13) tragenden Rastfedern (8-12) gebildet sind.

5. Energieführungskette nach Anspruch 4, bei der die Schmallängsseiten der Querstege mit Seitennuten zur Befestigung von Trennstegen versehen sind,
**dadurch gekennzeichnet,**
**dass** die Rastnasen (13) in die Nuten (17) eingreifen.

6. Energieführungskette nach einem der Ansprüche 1 bis 5, bei der die ins Ketteninnere weisenden Seiten der Querstege mit jeweils einer Bodennut zur Befestigung von Trennstegen versehen sind,
**dadurch gekennzeichnet,**
**dass** das Profil (2) mit mindestens einem in die Bodennut passenden Nocken (14) versehen ist.
